Europäisches Patentamt

(19) European Patent Office

Office européen des brevets

(11) EP 0 572 906 B1

## (12) EUROPEAN PATENT SPECIFICATION

(45) Date of publication and mention
of the grant of the patent:
**27.11.1996 Bulletin 1996/48**

(51) Int. Cl.⁶: **B60C 9/20**, B60C 9/22

(21) Application number: **93108465.1**

(22) Date of filing: **26.05.1993**

(54) **Improvements to belt structures in tyres for vehicle wheels**

Verbesserungen an Reifen-Verstärkungsstrukturen für Fahrzeugräder

Améliorations apportées aux nappes de sommet dans des bandages pneumatiques pour roues de véhicules

(84) Designated Contracting States:
**AT BE DE ES FR GB LU NL SE**

(30) Priority: **02.06.1992 IT MI921351**

(43) Date of publication of application:
**08.12.1993 Bulletin 1993/49**

(73) Proprietor: **PIRELLI COORDINAMENTO
PNEUMATICI S.p.A.
20126 Milano (IT)**

(72) Inventor: **Maiocchi, Luigi
Vernate - Fraz. Moncucco, Milan (IT)**

(74) Representative: **Giannesi, Pier Giovanni et al
Pirelli S.p.A.
Direzione Proprietà Industriale
Viale Sarca, 222
20126 Milano (IT)**

(56) References cited:
**EP-A- 0 288 987          FR-A- 2 417 406
FR-A- 2 499 473          GB-A- 2 061 202
GB-A- 2 064 445          GB-A- 2 070 526**

EP 0 572 906 B1

## Description

The present invention relates to tyres for vehicle wheels and more particularly tyres of the radial type, that is those provided with a carcass in which the reinforcing cords thereof lie in substantially radial planes, that is planes containing the tyre axis, axially extending from one bead to the other.

The general structure of a tyre is presently universally known and therefore no explanations will be given as regards terms such as carcass, carcass plies, bead core, belt, sidewalls, tread and other usual terms that will be commonly employed in the progress of the present description.

This type of tyre is also comprised of a circumferential reinforcement usually known as belt, disposed crownwise to the tyre and interposed between the tread band and the carcass ply or plies.

It is well known that the belt structure can exert a very important influence on the behaviour features of the tyre in use and on the durability thereof, namely on the wear speed and evenness of the tread.

More particularly, the invention relates to those belt structures that are particularly adopted in tyres of high carrying truck type, comprising at least two radially superposed layers of metal cords disposed parallelly to one another in each layer and crossed with those of the adjacent layer, with said layers being axially extended almost over the whole tread width, and further provided on each end with a reinforcing ring, at a radially external position with respect to the underlying layers, consisting of one or more superposed strips of textile or metal cords, of the high elongation type, oriented circumferentially, that is parallelly to the equatorial plane of the tyre.

There are several different reasons for which the cords of the side reinforcing strips must be of the high elongation type, that is susceptible of greater elongation that those used for reinforcing layers, and they are well known to those skilled in the art: however the main reason on which all the others can be considered as dependent is that the lower modulus (greater extensibleness) of the strip cords must compensate for the greater efficiency of the same in withstanding tensile stresses that are produced in the structure by effect of the inflation pressure and centrifugal force to which the tyre in use is submitted: this efficiency is due to the circumferential orientation, that is according to the direction of the acting stresses, which is different from the orientation of the layer cords that, on the contrary, are oriented obliquely, that is inclined to the circumferential direction of the tyre.

In conclusion, using cords having a high modulus in the layers and a low modulus in the strips, belt strips and layers can be made which are altogether provided with moduli of elasticity having the same order of magnitude, giving therefore rise to homogeneous belt structures first of all enabling a correct moulding of the raw tyre which brings about a controlled expansion of the crown area in the tyre, and also capable of withstanding the stress state to which tyres in use are submitted in a substantially uniform manner.

It is known that in order to offer good drive behaviour features a tyre must have a profile at the tread that seen in right section exhibits a slightly curved configuration, that is convex to the outside, whereas in order to enable the tread to offer a good wear evenness said profile must be substantially flat, thereby creating an impression area which is more rectangular than elliptic.

As is well-known, this profile is connected with the profile of the underlying belt structure.

The wear evenness and abrasionproof feature under soft use conditions have increasingly acquired a greater importance as time goes by, for the purpose of reducing costs and due to the fact that an uneven wear adversely affects the drive behaviour of the tyre to an important extent, giving rise to vibrations and continuous deviations of the vehicle from its trajectory.

The above mentioned belt structures are known for example from GB-A-2 064 445 which are providing for a tread reinforcing breaker formed by two plies and two longitudinally extending border plies constituted by cords with high initial elongation, and from GB-A-2 061 202 which discloses a tyre having an annular reinforcing structure comprising two layers of metallic wires and two annular reinforcing strips with high elongation metal cords.

Additional examples of the above discussed belt structures have been described also in EP-A-0 288 987 (US-A-4 945 967) and US-A-4 420 025 both in the name of the Applicant which tyres have generally given satisfactory responses to all users' requirements.

However, the known tyres still exhibit a certain degree of responsiveness to wear unevenness, above all when tyres are mounted to the steering axles; this uneven wear appears above all at the tread ends and on the longitudinal rib edges, said uneven wear being known to those skilled in the field as "tram-line".

On the other hand, the solution to these problems in accordance with the known art needs measures to be adopted which are in mutual opposition as regards the tyre behaviour in use: in other words, a further improvement in the wear evenness with respect to the present values can only be achieved by further flattening the belt profile of the tyre, which however brings about a non-negligible loss of responsiveness as regards the drive qualities (prompt response to steering and direction steadiness) which are on the contrary enhanced by the belt (and consequently the tread) convexity.

Attempts to overcome this opposite action have already been made in the past by the Applicant itself: for example, in accordance with teachings contained in the US patent No. 4.564.055 attempts have been made in order to try to control the belt structure behaviour in a tyre in use by acting on the carcass ply profile.

More specifically, during the tyre manufacturing step a circumferentially-inextensible constraint structure is fitted on the carcass and more precisely on the ends of the belt disposed crownwise to the carcass; during the tyre conformation and moulding the corresponding carcass ply portion is blocked to a predetermined value whereas the adjacent areas can freely expand.

In this way the carcass profile seen in right section exhibits, at these constraint structures, an outwardly directed concavity by effect of which in the tyre in use the belt structure ends are tension-loaded thereby giving rise to a uniform tensile stress state over the whole belt structure.

On the other hand this solution too has not reached the expected results.

The Applicant has now the feeling that the cited faults may depend to a great extent on the tapering shape or conicity of the belt structure edges in combination with reinforcing elements, the above mentioned rings, provided with cords disposed in the circumferential direction.

This conicity originates in usual tyres from the manufacture method followed, which method is well-known so that a short description of the same will suffice to understand it and the genesis of the invention described in the following.

At the beginning carcass and belt are made separately on two different building drums and are subsequently assembled together so as to form the completed tyre to be sent to vulcanization.

In order to understand the point it is necessary to consider the fact that the belt, as is known, is first of all manufactured in a flat arrangement on an appropriate auxiliary drum of the collapsible stiff type, and then provided on its radially outer surface with an appropriate tread band of substantially trapezoidal shape and substantially having a constant thickness. The cylindrical sleeve thus made is removed from the auxiliary drum and fitted to the carcass, mounted on a different drum; the carcass is then shaped by low pressure fluid so that its crown portion may adhere to the radially inner surface of said sleeve and, more particularly, the belt structure.

The fluid used during this shaping step is kept to such a high pressure value (1.0 - 1.20 bar) that said sleeve can be be assembled to the carcass by rolling of the assembly, but not so high as to cause the carcass ply to fray around the reinforcing bead cores.

By this fluid pressure value the belt and the radially outer profile of the tread band acquire a slight convexity in the middle, in the area included between the reinforcing rings, but remain substantially cylindrical at the ends, at said rings, in that said pressure is not sufficient to win the elongation strength offered by the cords disposed in the longitudinal direction.

Subsequently the raw tyre is inserted in the vulcanization mould the inner surface of which, at the tread band, has a curvilinear outline with a substantially constant bending; here the tyre moulding is carried out by means of high pressure fluid, so as to impart a "stretching" to the belt, that is a circumferential expansion needed to vulcanize the tyre with the belt in a preloading state, that is in an initial tension state.

As a result of this high pressure value, the belt and thread band profiles are modified and take the same bending as the mould surface; it is apparent that in passing from a "pagoda-shaped" profile, cylindrical at the ends and convex in the middle, the cylindrical portion of the belt profile, that is the portion close to the reinforcing rings, must rotate radially outwardly about its axially outermost edge taking a cone-shaped profile, the vertex of which is at the outside of the tyre.

In conclusion, the circumferential cords of the strips are in a final elongation state substantially corresponding to 0.4% for the cords at the axially outer edge of the ring and 1.2% for those corresponding to the axially inner edge.

This process results in reinforcing rings in the vulcanized and use tyre that exhibit a rolling radius varying in an axial direction, with the relating cords being differently loaded between the two ends of each ring.

This difference in stretching the different strip cords, when the method of manufacturing belts on a flat drum is adopted, cannot be in principle eliminated. This difference can be eliminated only by helically laying down the cord, turn by turn, by a continuous axial movement, on the already shaped belt.

On the other hand, also by adopting this system it would be impossible to eliminate the difference in the rolling radii in the different circumferential planes of the rings, so that the adopted belt-manufacturing systems do not seem adapted to solve the cited drawbacks which can be now efficiently solved by the structure of the invention.

In fact, assuming that these localized unevennesses may be the cause of said responsiveness to irregular consumptions, the applicant has now found a manner to overcome said contradiction situation while at the same time improving both the above cited features without encountering any of the related drawbacks. So, in accordance with the present invention, in tyres for vehicle wheels of the type comprising a belt provided with at least two radially superposed metal fabric layers having crossed cords, and at least another reinforcing strip having circumferential cords, disposed at a radially outer position on each end of said layers, it is possible to further improve the wear evenness and yield per kilometre of the tread along with the behaviour features of the tyre in use.

In its most general aspect the invention relates to a method of making tyres for vehicle wheels comprising a carcass of the radial type, a tread band disposed crownwise to said carcass and a belt structure fitted between the tread band and carcass, said belt structure comprising at least two radially superposed layers of metal fabric, at least one of which is substantially as wide as the tread, said layers being reinforced with cords having an ultimate elongation included between 2% and 4%, preferably between 2.5% and 3.5%, said cords being disposed parallel to one another in each layer and crossed with those of the opposite layer, symmetrically inclined to the longitudinal direction of the tyre, according to an angle included between 10° and 30°, and a pair of reinforcing rings, each ring being disposed at one end of said belt structure at a radially outer position with respect to the largest one of said layers, mutually separated by an axial distance of a value not lower than 60% of the axial width of said belt structure, each ring comprising at least one rubberized fabric strip reinforced with cords disposed according to the circumferential direction of the tyre, having an ultimate elongation of higher value than the reinforcing cords of said radially innermost layers, said method being characterized by determining the moulding profile of said belt structure by adjusting the thickness of said tread band at said rings on the tyre to be vulcanized according to a thickness the value of which increases in the axial direction from the axially outer edge to the axially inner edge of said rings depending on the radially outer moulding profile of said tread band, so that when the tyre is vulcanized and inflated to the use pressure, the radially outer half portion of said carcass exhibits a toxic profile which is always concave towards the inside, said belt structure exhibits the rings of said pair lying in one and the same cylindrical surface, coaxial with the tyre and the remaining belt portion included between said rings is toroidally shaped according to a curvilinear profile substantially parallel to the profile of the corresponding carcass portion.

In a further aspect the invention also relates to a tyre for vehicle wheels comprising a carcass of the radial type and manufactured through the above mentioned method.

The present invention will be better understood from the following description and with the aid of the accompanying drawings given by way of non-limiting example, in which:

- Fig. 1 is a right section of the crown portion of a tyre vulcanized and inflated to its use pressure, showing, at the right centre line, a belt of known type, and at the left centre line, a belt in accordance with the invention,

- Fig. 2 shows the same tyre as in Fig. 1, under the same pressure conditions as above, loaded to its rated load,

- Fig. 3 shows the same tyre as in Fig. 1, already inserted in the vulcanization mould, before moulding,

- Figs, 4, 5, 6 and 7 show, in right section and flat configuration, how to prepare on the manufacture drum, four different embodiments of the belt structure of the invention.

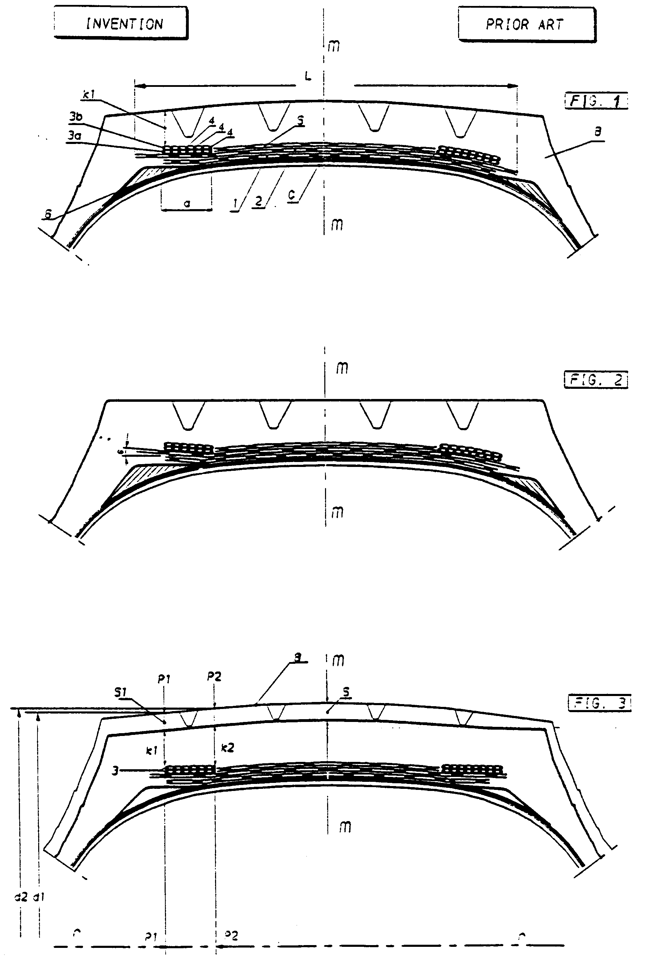

In one embodiment shown in Fig. 1, in a manner known per se, the tyre comprises a belt structure disposed crownwise to the carcass C, inserted between the latter and the tread band B, in which the well-known tread pattern is printed.

Said belt structure, going radially on from the inside to the outside, exhibits one layer 1 made of cords having a high modulus and low elongation (ultimate elongation included between 2% and 4%), preferably the well-known regular lay type metal cords extending in opposite ways and having an ultimate elongation included between 2.5% and 3.5%, disposed parallelly to one another in the layer and inclined according to an angle included between 10° and 30° to the circumferential direction of the tyre shown in Fig. 1 by line m-m of the equatorial plane.

A second layer 2 is disposed on the first layer: it is quite similar to the first one but its reinforcing cords cross the cords of the adjacent layer and are symmetrically inclined to the circumferential direction of the tyre, as well known to those skilled in the art. The width of the second layer can be greater than, as in the version shown in the figure, equal to, or lower than that of the underlying layer. At all events the width L of the largest layer taken as the width of the belt structure is marginally lower than that measured between the edges of the tread band B.

Generally the ends of the two superposed layers should be offset with respect to each other (approximately 5 to 10 mm), in order not to create a strong discontinuity in the mechanical features of the finished tyre, exactly at the belt end.

In a radially outer position to said pair of layers, at each end thereof, a reinforcing ring 3 is provided which comprises at least one strip 3a of rubberized fabric reinforced with cords 4 disposed in the circumferential direction of the belt structure and therefore the tyre, that is oriented at 0° (according to the usual definition). Preferably the ring is comprised of two strips (3a, 3b) radially superposed with respect to each other.

The width a of each of said rings 3 does not overcome 20% of the width L of the whole belt structure, but preferably has a quite lower value, of the order of 10 to 15%; these rings are therefore narrower than the rings of the corresponding known tyres. In addition, their axially outer edge is never projecting with respect to the end of the largest one of said underlying layers and preferably is coincident with the end of one of said layers or falls within the gap between said ends, that is at the mutual offset region.

In addition, the rings are separated from each other by a space not lower than 60% of said width L.

Preferably the cords of said strips are well-known High-Elongation (HE) long lay type metal cords, and having an ultimate elongation value included between 4.0% and 9.0%.

Said cords can be laid on the underlying layer in any known manner, for example by wrapping a strip of cords as wide as the ring around said layer, preferably carrying out a double turn providing overlapping at the ends or spirally wrapping around said layer a cord or a narrow ribbon containing few cords as far as the whole width of the ring 3 is covered.

If useful, in the gap between the two rings 3 a further layer 5 of High-Elongation cords is provided, which cords are inclined to the circumferential direction of the tyre, preferably according to an angle included between 10° and 40°, acting as a protection for the underlying bearing layers of the belt, in particular from possible mechanical attacks due to seizure of gravel by the hollows of the tread pattern.

Alternatively, it is possible to use a third layer acting as a further bearing layer for said belt.

In the progress of the present description defined as "bearing" layers are those layers that greatly affect the drive behaviour of the tyre, whereas defined as "protection" layers are those layers that exclusively exert a mechanical protection action on the radially innermost structures.

This difference of behaviour, connected with the different flexion stiffness and the different modulus of elasticity of the layers particularly depends on the mechanical features of the reinforcing cords and their density in the rubberized fabric, so that the bearing layers are characterized by the presence of cords of a high modulus, disposed in the fabric according to densities in the order of 50 to 69 threads/dm, whereas the protection layers are characterized by the presence of cords of a low modulus, disposed in the fabric according to densities in the order of 30 to 40 threads/dm.

Obviously the above described structure can be modified by altering the number and mutual position of the layers according to any other configuration which may be deemed as more appropriate by a person skilled in the art.

In accordance with the invention, in the vulcanized tyre dismantled from the vehicle and inflated to its use pressure, the rings 3 lie in one and the same cylindrical surface whereas the remaining portion of the belt structure keeps the profile of known tyres, slightly convex to the outside.

By effect of this lying that can be detected by an appropriate impression of the tyre under the above specified inflated conditions, the circumferential cords in the strips of the ring 3 are now in a pre-loading and uniform-elongation condition, approximately corresponding to 0.8%, throughout the whole width of the ring.

The structure difference as compared to known tyres can be understood at once by noticing that in the tyre of the invention, in spite of said pagoda-shaped belt profile, the radially outer surface of the tread band still keeps a profile slightly convex to the outside over the whole axial extension thereof, from one end to the other of the tread, which is common to all tyres of the same type.

This difference results in a different thickness $\underline{k}$ of the tread band at the ring edges as compared with a uniform thickness in known tyres, that is in the fact that said thickness $\underline{k}$ increases from the axially outer edge of the ring to the inner edge, whereas in known tyres having a belt profile substantially parallel to the outer tread profile, this thickness is constant or decreases axially towards the inside. For example, in a tyre measuring 315/80 R 22.5, in accordance with that which is shown in the figure, in the half portion relating to the invention, the thickness of the band varies from 20 mm to 22.5 mm moving axially from the outside to the inside, whereas in the corresponding tyre of the known art this thickness keeps a constant value of 22.5 mm.

As a further consequence of the above structural features, in the tyre of the invention inflated to its use pressure and loaded to the rated load value, see Fig. 2, by effect of the consequent deflection, the profile of the belt structure is deformed so that said rings are disposed according to a weakly cone-shaped surface converging towards the inner part of the tyre, according to an angle $\underline{w}$ having a width in the order of 2° to 3°.

The particular profile of the belt structure in accordance with the invention is achieved, as better clarified in the following, by controlling the outer profile of the raw tyre to be vulcanized in connection with the corresponding coupling profile of the vulcanization mould: optionally, since the radially outer half portion of the carcass must keep its profile constantly concave to the inside, appropriate shims 6 of elastomeric material may be used in combination with the above said control.

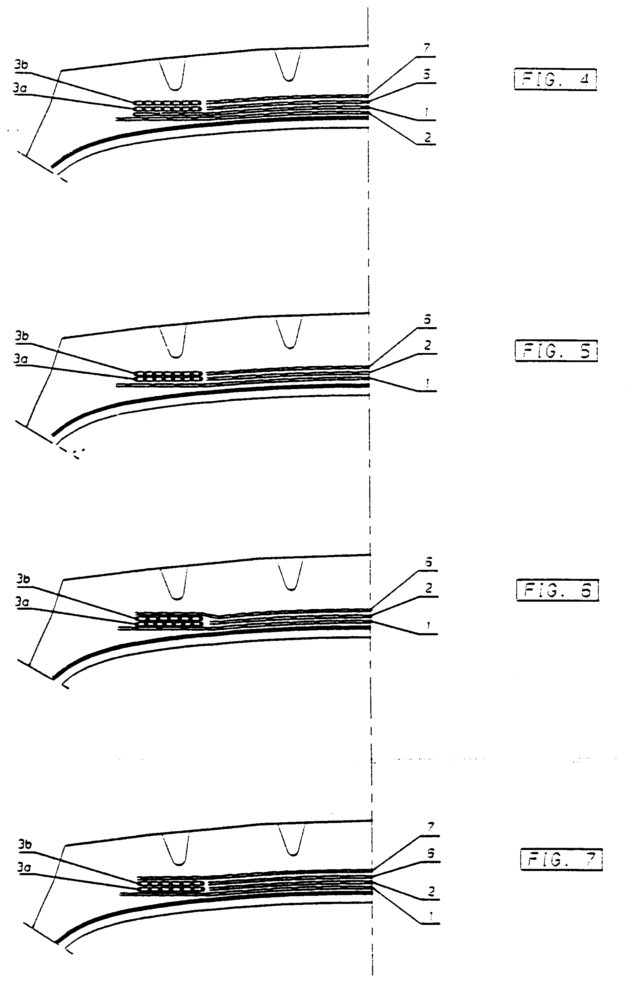

Figs. 4 to 7 show the right section of tyres comprising the belt structure in accordance with the invention in other useful alternative embodiments of said structure.

The structure in Fig. 4 shows the mutual lying of layers 1 and 2 which is reversed with respect to the structure of Fig. 1 and further comprising a second protection (gravel guard) layer 7 in the axial gap between said rings, which is radially superposed to the first layer 5.

As already said, in a different convenient construction version the first layer 5 is not a protection layer but a third bearing layer.

In Fig. 5 layer 2 has a remarkably reduced width, sufficient to enable it to be inserted between the rings 3 in a radially inner position with respect to the gravel guard layer 5, so as to achieve a thinner belt which is more convenient for tyres of reduced sizes.

In Fig. 6 the belt structure of the preceding figure has been modified by increasing the width of the protection layer 5 as far as it covers the radially outer surface of rings 3.

Finally, the belt structure of Fig. 7 is the result of the combination between the solutions individually adopted in the preceding structures of Figs. 4, 5 and 6, exhibiting a belt pattern providing for two radially outermost bearing layers 2 and 6 to be inserted between the rings 3, and also enlarging the protection layer 7 as far as it covers the radially outermost surface of the rings, thereby achieving a belt structure of constant thickness like the structure in Fig. 5, but of greater strength for tyres having bigger sizes.

In a further aspect the invention relates to a manufacture method for the above structures which is herein described in combination with Fig. 3.

This figure refers to a raw tyre, already inserted in the vulcanization mould, showing, as in the preceding Figs. 1 and 2, the raw tyre according to the known art in the right-hand area and the raw tyre of the invention in the left-hand area.

This vulcanization mould is shown in the figure from its radially inner profile 8: the free space existing between the outer surface of the tyre and that of the cavity defined by the mould is termed "air gap" in the present description and identified by reference $\underline{s}$.

It is clear that the width of said air gap along the extension of the tread band can vary depending on the profile taken by this band in the preceding conformation step.

In fact, where known tyres are concerned there is the existence of an air gap of variable magnitude at the area of the belt rings, in that, during the conformation step, the radially outer surface of the tread band has taken the same pagoda-shaped profile as the belt structure.

As a result, during the moulding step the reinforcing rings of the belt are deformed and dispose themselves according to the already mentioned conical surface which is supposed to be the cause of the detected drawbacks.

On the contrary, the moulding of the tyre in accordance with the invention, with the consequent belt stretching, does not modify the profile of the reinforcing rings disposed at the ends of said belt, said rings keeping their cylindrical conformation conveniently on the same cylindrical surface, so that all cords of the rings take the same stretching value, preferably in the order of approximately 0.8%.

The foregoing is achieved by controlling the thickness of the tread band along its axial extension during the band production step, so that, when the raw tyre has been inserted in the mould, the value of the air gap $s_1$ is constant along the axial extension of said rings.

In practice, the thickness $k_2$ of the tread band at the circumferential plane $p_2$ perpendicular to the tyre axis passing by the axially inner edge of the lying surface of ring 3, will be equal to the value of thickness $k_1$ measured at the same plane $p_1$ passing by the axially outer edge of said cylindrical surface, increased by the value $(d_2 - d_1)/2$ where $d_1$ and $d_2$ are the diameter values of the vulcanized tyre mounted to its use rim but not inflated, measured at said planes $p_1$ and $p_2$ which are substantially coincident with the same measure detectable on the tyre mould.

In other words it must be: $k_2 = k_1 + (d_2 - d_1)/2$.

Clearly the same rule is also valid for any intermediate planes between said planes $p_1$ and $p_2$.

Preferably the thickness of the tread band along its axial extension in the tread area included between said pair of planes $p_2$, on the opposite sides of the equatorial plane, will be such selected that, when the raw tyre has been inserted in the mould, the air gap $s_1$ value is slightly increasing from the area of said planes towards the equatorial plane of the tyre, in order to enable a greater stretching of the belt layers having inclined cords, in the order of 1 to 2%, in the belt portion included between said rings.

It is apparent that the overall value of said stretching, in particular on the rings, depends on the amount of the initial air gap.

The tyre of the invention has proved its capability of efficiently solving the tackled problem: in fact the arrangement of the cords at 0° according to a cylindrical surface giving the reinforcing rings the same rolling radius of constant value along the axial extension thereof and a uniform tension state, has reached the objective of limiting the above cited few faults and separating the wear-resistance features from the requirement of a flattening of the tyre impression area, which substantially remains still elliptic by virtue of the bending of the radially outer profile of the tread band: as a result, a tyre offering better features as regards its wear evenness and a low abrasion action as regards the tread has been achieved, in spite of the above mentioned convexity which in turn enhances the behaviour qualities of the tyre in use.

As regards the alternative embodiments previously described, it is important to stress that belts having a uniform thickness, that is the same number of layers along their axial extension (Figs. 4, 5 and 7) enable the rubber layer under the tread pattern grooves to have a uniform thickness, and belt structures offering mechanical features of constant value to be achieved.

In addition, the widening of the protection gravel guard layer so that it may cover the surface of the reinforcing rings hinders the priming of cracks at the groove bottoms, which are particularly promoted when gravel collected by the tread during the running is not ejected, and facilitates the tread remoulding in worn tyres; in fact, without this solution, the operation for removing the worn tread would involve the risk of damaging the reinforcing rings of the belt structure.

**Claims**

1.  A method of making tyres for vehicle wheels comprising a carcass (C) of the radial type, a tread band (B) disposed crownwise to said carcass and a belt structure fitted between the tread band and carcass, said belt structure comprising at least two radially superposed layers (1, 2) of metal fabric, at least one of which is substantially as wide as the tread (B), said layers (1, 2) being reinforced with cords having an ultimate elongation included between 2% and 4%, preferably between 2.5% and 3.5%, said cords being disposed parallel to one another in each layer and crossed with those of the opposite layer, symmetrically inclined to the longitudinal direction (m, m) of the tyre, according to an angle included between 10° and 30°, and a pair of reinforcing rings (3), each ring being disposed at one end of said belt structure at a radially outer position with respect to the largest one of said layers, mutually separated by an axial distance of a value not lower than 60% of the axial width (L) of said belt structure, each ring (3) comprising at least one rubberized fabric strip (3a, 3b) reinforced with cords (4) disposed according to the circumferential direction of the tyre, having an ultimate elongation of higher value than the reinforcing cords of said radially innermost layers, characterized by determining the moulding profile of said belt structure by adjusting the thickness of said tread band (B) at said rings (3) on the tyre to be vulcanized according to a thickness the value of which increases in the axial direction from the axially outer edge to the axially inner edge of said rings depending on the radially outer moulding profile of said tread band (B), so that when the tyre is vulcanized and inflated to the use pressure, the radially outer half portion of said carcass (C) exhibits a toric profile which is always concave towards the inside, said belt structure exhibits the rings (3) of said pair lying in one and the same cylindrical surface, coaxial with the tyre, and the remaining belt portion included between said rings (3) is toroidally shaped according to a curvilinear profile substantially parallel to the profile of the corresponding carcass portion (C).

2. A method according to claim 1, characterized in that the relationship between the thickness (k1) of the tread band (B) at the circumferential plane (p2) perpendicular to the tyre axis passing by the axially outer edge of the lying surface of ring (3) and the thickness (k2) of the tread band at the circumferential plane (p2) perpendicular to the tyre axis passing by the axially inner edge of the lying surface of ring (3) is given by:

$$k2 = k1 + (d2 - d1)/2$$

where d1 and d2 are the diameter values of the vulcanized tyre mounted to its use rim but not inflated, measured at said planes (p1, p2).

3. A method according to claim 1 or 2, characterized in that the thickness of said tread band (B) along its axial extension in the tread area included between the pair of planes (p2) at the axially outer edge on the opposite sides of the equatorial plane is selected so that, when the raw tyre has been inserted in the mould (8), the air gap value (s1) is slightly increasing from the area of said planes (p2) towards the equatorial plane (m, m) of the tyre.

4. A tyre for vehicle wheels manufactured according to the method of claims 1 to 3.

5. A tyre according to claim 4, characterized in that when the tyre is vulcanized, inflated to the use pressure and loaded to the rated value load, said belt structure (B) exhibits the rings (3) of said pair lying in a cone-shaped surface coaxial with the tyre, converging towards the inside of the tyre.

6. A tyre according to claim 4, characterized in that the reinforcing cords (4) of said strips (3a, 3b) are long lay type High Elongation metal cords, having an ultimate elongation included between 4% and 9%.

7. A tyre according to claim 4, characterized in that said reinforcing rings (3) have a width not larger than 20% of the width of said belt structure (B).

8. A tyre according to claim 4, characterized in that the thickness of said tread band (B), at said rings (3), increases moving axially on front the outside towards the inside.

9. A tyre according to claim 4, characterized in that the radially outermost layers to said first layer have a width not larger than that of the axial gap existing between said rings and are axially disposed between the latter.

10. A tyre according to claim 4, characterized in that in a radially outer position to said inclined cord layers there is a further belt protection layer (5) which is reinforced with cords having a low modulus and inclined to the circumferential direction of the tyre.

11. A tyre according to claim 10, characterized in that said protection layer (5) has the reinforcing cords inclined to an angle included between 10° and 40°.

12. A tyre according to claim 10, characterized in that the protection layer at a radially outermost position extends axially from one edge to the other between the axially outer edges of said reinforcing ring pair.

**Patentansprüche**

1. Verfahren zum Herstellen von Reifen für Fahrzeugräder, die eine Karkasse (C) in Radialbauweise, ein Laufflächenband (B), das kronenartig an der Karkasse angeordnet ist, und einen Gurtaufbau aufweist, der zwischen dem Laufflächenband und der Karkasse eingefügt ist und wenigstens zwei radial übereinander gelegte Lagen (1, 2) eines Metallgewebes, von denen wenigstens eine im wesentlichen so breit wie die Lauffläche (B) ist, wobei die Lagen (1, 2) mit Korden verstärkt sind, die eine Bruchdehnung zwischen 2 % und 4 %, vorzugsweise zwischen 2,5 % und 3,5 % haben, die Korde parallel zueinander in jeder Lage und gekreuzt mit denen der gegenüberliegenden Lage angeordnet sind und symmetrisch zur Längsrichtung (m, m) des Reifens entsprechend einem Winkel zwischen 10° und 30° geneigt sind, sowie ein Paar von verstärkenden Ringen (3) aufweist, von denen jeder an einem Ende des Gurtaufbaus in einer radial äußeren Position bezogen auf die größte der Lagen angeordnet ist, die gegenseitig durch einen axialen Abstand mit einem Wert getrennt sind, der nicht kleiner als 60 % der axialen Breite (L) des Gurtaufbaus ist, wobei jeder Ring (3) wenigstens ein mit Kautschuk versehenes Gewebeband (3a, 3b) aufweist, das mit Korden (4) verstärkt ist, die der Umfangsrichtung des Reifens ensprechend angeordnet sind und eine Bruchdehnung mit einem Wert haben, der höher ist als der der Verstärkungskorde der radial innersten Lagen, gekennzeichnet durch Bestimmen des Ausformprofils des Gurtaufbaus durch Einstellen der Dicke des Laufflächenbandes (B) an den Ringen (3) an dem zu vulkanisierenden Reifen entsprechend einer Dicke, deren Wert in Axialrichtung von dem axial äußeren Rand zum axial inneren Rand der Ringe abhängig von dem radial äußeren Ausformprofil des Laufflächenbandes (B) zunimmt, so daß, wenn der Reifen vulkanisiert und auf den Betriebsdruck aufgepumpt wird, der radial äußere Halbabschnitt der Karkasse (C) ein Torusprofil hat, das immer zu der Innenseite hin konkav ist, wobei der Gurtaufbau die Ringe (3) des Paares aufweist, die in ein- und derselben zylindrischen Fläche koaxial zu dem Reifen liegen, und wobei der verbleibende Gurtabschnitt, der zwischen den Ringen (3) eingeschlossen ist, toroidförmig entsprechend einem krummlinigen Profil ist, das im wesentlichen parallel zu dem Profil des entsprechenden Karkassenabschnitts (C) ist.

2. Verfahren nach Anspruch 1, dadurch gekennzeichnet, daß die Beziehung zwischen der Dicke (k1) des Laufflächenbandes (B) an der Umfangsebene (p2) senkrecht zur Reifenachse vorbeigehend an dem axial äußeren Rand der liegenden Fläche des Rings (3) und der Dicke (k2) des Laufflächenbandes an der Umfangsebene (p2) senkrecht zur Reifenachse vorbeigehend an dem axial inneren Rand der liegenden Fläche des Rings (3) gegeben wird durch

$$k2 = k1 + (d2 - d1)/2,$$

wobei d1 und d2 die Durchmesserwerte des vulkanisierten Reifens sind, der auf seine Einsatzfelge montiert, jedoch nicht aufgepumpt ist, gemessen in den genannten Ebenen (p1, p2).

3. Verfahren nach Anspruch 1 oder 2, dadurch gekennzeichnet, daß die Dicke des Laufflächenbandes (B) längs seiner axialen Erstreckung in dem Laufflächenbereich zwischen dem Paar von Ebenen (p2) an dem axial äußeren Rand der gegenüberliegenden Seiten der Äquatorialebene so gewählt wird, daß, wenn der Reifenrohling in die Form (8) eingesetzt worden ist, der Luftspaltwert (s1) von dem Bereich der Ebenen (p2) zu der Äquatorialebene (m, m) des Reifens hin geringfügig zunimmt.

4. Reifen für Fahrzeugräder, hergestellt nach dem Verfahren der Ansprüche 1 bis 3.

5. Reifen nach Anspruch 4, dadurch gekennzeichnet, daß, wenn der Reifen vulkanisiert, auf den Einsatzdruck aufgepumpt und mit der Nennwertlast belastet wird, der Gurtaufbau (B) die Ringe (3) des Paares aufweist, das in einer konusförmigen Fläche liegt, die koaxial zu dem Reifen ist und zu der Innenseite des Reifens konvergiert.

6. Reifen nach Anspruch 4, dadurch gekennzeichnet, daß die Verstärkungskorde (4) der Bänder (3a, 3b) Hochdehnungsmetallkorde der Langlegebauweise sind, die eine Bruchdehnung zwischen 4 % und 9 % haben.

7. Reifen nach Anspruch 4, dadurch gekennzeichnet, daß die verstärkenden Ringe (3) eine Breite haben, die nicht größer als 20 % der Breite des Gurtaufbaus (B) ist.

8. Reifen nach Anspruch 4, dadurch gekennzeichnet, daß die Dicke des Laufflächenbandes (B) an den Ringen (3) axial im Verlauf von der Außenseite zur Innenseite hin zunimmt.

9. Reifen nach Anspruch 4, dadurch gekennzeichnet, daß die radial äußersten Lagen zu der ersten Lage eine Breite haben, die nicht größer als die des axialen Spaltes ist, der zwischen den Ringen besteht, und axial zwischen den letzteren angeordnet sind.

10. Reifen nach Anspruch 4, dadurch gekennzeichnet, daß in einer radial äußeren Position zu den geneigten Kordlagen eine weitere Gurtschutzlage (5) vorhanden ist, die mit Korden verstärkt ist, die einen niedrigen Modul haben und zur Umfangsrichtung des Reifens geneigt sind.

11. Reifen nach Anspruch 10, dadurch gekennzeichnet, daß in der Schutzlage (5) die Verstärkungskorde mit einem Winkel zwischen 10° und 40° geneigt sind.

12. Reifen nach Anspruch 10, dadurch gekennzeichnet, daß die Schutzlage an einer radial äußersten Position sich axial von einem Rand zum anderen zwischen den axial äußeren Rändern des verstärkenden Ringpaares erstreckt.

## Revendications

1. Procédé de fabrication de pneumatiques pour roues de véhicule, comprenant une carcasse (C) de type radial, une bande de roulement (B) placée en couronne sur ladite carcasse et une structure de ceinture logée entre la bande de roulement et la carcasse, ladite structure de ceinture comprenant au moins deux couches radialement superposées (1, 2) de tissu métallique, dont l'une au moins est sensiblement aussi large que la bande de roulement (B), lesdites couches (1, 2) étant renforcées par des câblés dont l'allongement à la rupture est compris entre 2 et 4% et de préférence entre 2,5 et 3,5%, lesdits câblés étant disposés pour être parallèles entre eux dans chaque couche et pour croiser ceux de la couche opposée, en étant inclinés de façon symétrique par rapport à la direction longitudinale (m, m) du pneumatique d'un angle compris entre 10 et 30°, et une paire de bagues de renfort (3), chaque bague étant placée en une extrémité de ladite structure de ceinture en une position radialement extérieure par rapport à la plus large desdites couches, mutuellement séparées par une distance axiale d'une valeur qui n'est pas inférieure à 60% de la largeur axiale (L) de ladite structure de ceinture, chaque bague (3) comprenant au moins un ruban (3a, 3b) de tissu caoutchouté renforcé de câblés (4) disposés suivant la direction de la circonférence du pneumatique, ayant un allongement à la rupture d'une valeur plus élevée que celui des câblés de renfort desdites couches radialement les plus intérieures, caractérisé par le fait qu'on détermine le profil de moulage de ladite structure de ceinture en ajustant l'épaisseur de ladite bande de roulement (B) au niveau desdites bagues (3) sur le pneumatique à vulcaniser en fonction d'une épaisseur dont la valeur augmente dans la direction axiale du bord axialement extérieur au bord axialement intérieur desdites bagues en fonction du profil de moulage radialement extérieur de ladite bande de roulement (B), de sorte que lorsque le pneumatique est vulcanisé et gonflé à la pression d'utilisation, la moitié radialement extérieure de ladite carcasse (C) présente un profil de tore qui est toujours concave vers l'intérieur, les bagues (3) de ladite paire sont situées sur ladite structure de ceinture dans une seule et même surface cylindrique, coaxiale au pneumatique, et la partie restante de la ceinture comprise entre lesdites bagues (3) a une forme de tore avec un profil curviligne sensiblement parallèle au profil de la partie de carcasse correspondante (C).

2. Procédé selon la revendication 1, caractérisé en ce que la relation entre l'épaisseur (k1) de la bande de roulement (B) au niveau du plan circonférentiel (p1) perpendiculaire à l'axe du pneumatique passant par le bord radialement extérieur de la surface de placement de la bague (3) et l'épaisseur (k2) de la bande de roulement (B) au niveau du plan circonférentiel (p2) perpendiculaire à l'axe du pneumatique passant par le bord radialement intérieur de la surface de placement de la bague (3) est donnée par :

$$k2 = k1 + (d2 - d1)/2$$

dans laquelle d1 et d2 sont les valeurs du diamètre du pneumatique vulcanisé monté sur sa jante d'utilisation mais non gonflé, mesurées au niveau desdits plans (p1, p2).

3. Procédé selon la revendication 1 ou 2, caractérisé en ce que l'épaisseur de ladite bande de roulement (B) dans la longueur axiale de la partie de la bande de roulement comprise entre la paire de plans (p2) au niveau du bord axialement extérieur sur les côtés opposés du plan équatorial est choisie pour que, lorsque le pneumatique vert a été inséré dans le moule (8), la valeur de l'intervalle d'air (s1) augmente légèrement de la région desdits plans (p2) vers le plan équatorial (m, m) du pneumatique.

4. Pneumatique pour roues de véhicule fabriqué selon le procédé des revendications 1 à 3.

5. Pneumatique selon la revendication 4, caractérisé en ce que lorsque le pneumatique est vulcanisé, gonflé à la pression d'utilisation et chargé à la charge nominale, ladite structure de ceinture (B) a les bagues (3) de ladite paire qui sont situées dans une surface de forme conique coaxiale au pneumatique et convergeant vers l'intérieur du pneumatique.

6. Pneumatique selon la revendication 4, caractérisé en ce que les câblés de renfort (4) desdits rubans (3a, 3b) sont des câblés métalliques à fort allongement du type à torsion simple, dont l'allongement à la rupture est compris entre 4 et 9%.

7. Pneumatique selon la revendication 4, caractérisé en ce que lesdits câblés de renfort (3) ont une largeur qui n'excède pas 20% de la largeur de ladite structure de ceinture (B).

8. Pneumatique selon la revendication 4, caractérisé en ce que l'épaisseur de ladite bande de roulement (B) au niveau desdites bagues (3) augmente quand on se déplace axialement de l'extérieur vers l'intérieur.

9. Pneumatique selon la revendication 4, caractérisé en ce que les couches radialement les plus externes de ladite première couche ont une largeur qui n'excède pas celle de l'intervalle axial existant entre lesdites bagues et sont disposées axialement entre ces dernières.

10. Pneumatique selon la revendication 4, caractérisé en ce que, en une position radialement extérieure par rapport auxdites couches de câblés inclinés, il y a en outre une couche (5) de protection de ceinture qui est renforcée par des câblés ayant un faible module et inclinés par rapport à la direction de la circonférence du pneumatique.

11. Pneumatique selon la revendication 10, caractérisé en ce que ladite couche de protection (4) a des câblés de renfort inclinés d'un angle compris entre 10 et 40°.

12. Pneumatique selon la revendication 10, caractérisé en ce que ladite couche de protection se trouvant en une position radialement extérieure s'étend axialement d'un bord à l'autre entre les bords axialement extérieurs de ladite paire de bagues de renfort.

INVENTION

PRIOR ART

FIG. 1

FIG. 2

FIG. 3

FIG. 4

FIG. 5

FIG. 6

FIG. 7